# EUROPÄISCHE PATENTSCHRIFT

(11) **EP 3 152 929 B1**
(45) Veröffentlichungstag und Bekanntmachung des Hinweises auf die Patenterteilung: **03.01.2018**
(21) Anmeldenummer: 15718772.5
(22) Anmeldetag: 17.04.2015
(51) Int. Cl.: H04W 4/04, H04L 29/08, H04W 76/02

(54) **FERNSTEUERN EINES KRAFTFAHRZEUGS WÄHREND EINER PARKPHASE**
REMOTE CONTROL OF A MOTOR VEHICLE DURING A PARKED PHASE
COMMANDE À DISTANCE D'UN VÉHICULE AUTOMOBILE PENDANT UNE PHASE DE STATIONNEMENT

(30) Priorität: 07.06.2014 DE 102014008478
(43) Veröffentlichungstag der Anmeldung: 12.04.2017
(73) Patentinhaber: Audi AG, 85045 Ingolstadt (DE)
(72) Erfinder: DALKE, Christoph, 85110 Kipfenberg (DE)
(74) Vertreter: Bauer, Dominik Michael
(86) Internationale Anmeldenummer: PCT/EP2015/000808
(87) Internationale Veröffentlichungsnummer: WO 2015/185172

(56) Entgegenhaltungen:
- DE-A1-102007 052 019
- DE-T5-112008 000 461

## Beschreibung

Die Erfindung betrifft ein Steuergerät für ein Kraftfahrzeug sowie ein Verfahren zum Einstellen oder Steuern des Kraftfahrzeugs von einem Steuerserver des Internets aus, während das Kraftfahrzeug geparkt ist. In der Parkphase ist die Zündung des Kraftfahrzeugs ausgeschaltet, so dass elektrische Geräte des Kraftfahrzeugs ausschließlich über einen elektrischen Energiespeicher des Kraftfahrzeugs, beispielsweise eine Batterie, mit elektrischer Energie versorgt werden.

Dennoch ist es heutzutage wünschenswert, dass ein Kraftfahrzeug auch in der Parkphase einen sogenannten Remote-Dienst oder Fernsteuerdienst anbietet, bei welchem das Kraftfahrzeug von außerhalb, beispielsweise über das Internet, konfiguriert oder allgemein gesteuert werden kann. Somit muss sichergestellt sein, dass das Kraftfahrzeug auf Steuerbefehle von außerhalb reagiert.

Für solche Remote-Dienste bleiben Steuergeräte gemäß der CN 102 955 453 A dauerhaft in einem Mobilfunknetz eingebucht und warten auf eingehende SMS-Nachrichten (SMS - Short Message Service) oder einen eingehenden Anruf. Dies kann aber mit einer unerwünscht hohen Latenzzeit verbunden sein. Außerdem kann es vorkommen, dass ein Benutzer einen Stellbefehl an das Kraftfahrzeug aussendet und sich dann im Nachhinein herausstellt, dass das Kraftfahrzeug in einem Funkloch geparkt ist und der Stellbefehl gar nicht ankommt.

Aus der DE 10 2006 024 634 B4 ist ein Verfahren zur drahtlosen Übermittlung von Infotainmentdaten zwischen einem Fahrzeugnetzwerk und einem fahrzeugexternen Netzwerk beschrieben. Das Fahrzeugnetzwerk weist einen empfangsbereiten Zustand und einen Ruhezustand auf, wobei über eine Fernbedienung des Fahrzeugs von dem Ruhezustand in den empfangsbereiten Zustand umgeschaltet wird. Diese aus dem Stand der Technik bekannte Methode zum Wechseln zwischen dem Ruhezustand und dem empfangsbereiten Zustand beruht auf einem separaten Empfänger, welcher ein Aufwecksignal in dem Kraftfahrzeug erzeugen kann. Dies führt zu einem unerwünscht hohen Schaltungsaufwand.

In der DE 10 2007 052 019 A1 ist ein Kraftfahrzeug beschrieben, dessen Telematikeinheit auch bei ausgeschalteter Fahrzeugzündung betrieben werden kann, um eine Nachricht über eine Mobilfunkverbindung zu empfangen. Falls sich die Einheit in einem Stand-By-Modus befindet, wird sie zum Abrufen der Nachricht aktiviert. Bei aktivierter Telematikeinheit kann diese eine Internetverbindung aufrechterhalten, um von einem Callcenter aus gesteuert zu werden.

In der DE 11 2008 000 461 T5 ist ein Kraftfahrzeug beschrieben, das sowohl einen Funkschlüsselempfänger als auch einen WLAN-Empfänger aufweist. Bei abgeschalteter Zündung des Kraftfahrzeugs ist der WLAN-Empfänger ebenfalls abgeschaltet. Um eine Nachricht an das Kraftfahrzeug übertragen zu können, muss mit einem Funkschlüssel der Funkschlüsselempfänger angesteuert werden, damit dieser den WLAN-Empfänger einschaltet.

Der Erfindung liegt die Aufgabe zugrunde, bei einem Kraftfahrzeug während einer Parkphase einen Remote-Dienst mit geringer Latenz bereitzustellen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Erfindungsgemäß wird für das Kraftfahrzeug ein Steuergerät bereitgestellt, das dazu ausgelegt ist, bei Empfangen eines im Kraftfahrzeug zum Einleiten der Parkphase ausgesendeten Zündung-Aus-Signals ein Hauptmodul abzuschalten. Unter Hauptmodul ist hierbei ein Schaltungsbereich des Steuergeräts gemeint, welcher dazu vorgesehen ist, im Fahrbetrieb des Kraftfahrzeugs, wenn also die Zündung eingeschaltet ist, betrieben zu werden. Zum Abschalten wird das Hauptmodul in dem Steuergerät beispielsweise stromlos geschaltet oder vom elektrischen Bordnetz entkoppelt. Das Zündung-Aus-Signal kann beispielsweise ein digitales Signal sein, das ein Klemme-15-Signal repräsentiert, wie es in der deutschen Industrienorm DIN 72552 definiert ist. In der Parkphase wird entsprechend durch das Ausschalten der Zündung ein Antriebsmotor des Kraftfahrzeugs ausgeschaltet, beispielsweise eine Verbrennungskraftmaschine oder ein Elektromotor, und das beschriebene Steuergerät ausschließlich mit elektrischer Energie aus einer Fahrzeugbatterie des Kraftfahrzeugs betrieben.

Um nun dennoch den Remote-Dienst bereitzustellen, ist in dem Steuergerät ein Mobilfunkmodul bereitgestellt, welches dazu ausgelegt ist, bei abgeschaltetem Hauptmodul in einem Mobilfunknetzwerk eingebucht zu bleiben. Mit anderen Worten kann das Mobilfunkmodul in dem Mobilfunknetzwerk über ein SIM identifiziert und aus dem Mobilfunknetzwerk heraus angesprochen oder kontaktiert werden. Des Weiteren ist eine Hilfsprozessoreinrichtung in dem Steuergerät bereitgestellt, die dazu ausgelegt ist, über das Mobilfunkmodul bei einem Adressserver des Internets eine Internetadresse reserviert zu halten und diese Internetadresse bei einem Steuerserver des Internets, welcher zum Fernsteuern des Kraftfahrzeugs ausgelegt ist, zu hinterlegen. Der Steuerserver bekommt hierzu durch die Hilfsprozessoreinrichtung eine gültige Internetadresse mitgeteilt. Der Steuerserver kann beispielsweise einen Internetdienst bereitstellen, welcher von einem Benutzer des Kraftfahrzeugs über das Internet angesprochen werden kann, um beispielsweise eine Standheizung des Kraftfahrzeugs zu programmieren.

Durch das Reservieren der Internetadresse bleibt das Steuergerät nicht nur über eine SIM-Identifikationsnummer (SIM - Subscriber Identity Module) vom Mobilfunknetzwerk aus ansprechbar, sondern es kann zusätzlich über die Internetadresse oder IP-Adresse (IP - Internet Protokoll) über das Mobilfunkmodul hinaus von dem Steuerserver des Internets aus mit der Hilfsprozessoreinrichtung kommuniziert werden.

Durch die Erfindung ergibt sich der Vorteil, dass durch Bereitstellen einer Internetadresse im Steuerserver Steuerdaten vom Steuerserver aus mit geringer Latenz an die Hilfsprozessoreinrichtung übertragen werden können. Die hierzu nötigen Kommunikationskanäle sind bereits im Voraus dauerhaft durch Einbuchen des Mobilfunkmoduls und Reservieren der Internetadresse bereitgestellt.

Die Erfindung sieht vor, dass die Hilfsprozessoreinrichtung dazu ausgelegt ist, von dem Steuerserver einen Aufweckbefehl zu empfangen und in Abhängigkeit von dem Aufweckbefehl über eine Aufweckleitung das Hauptmodul einzuschalten. Hierdurch kann während der Parkphase ferngesteuert eine Funktion des Hauptmoduls aktiviert werden. Die Aufweckleitung kann beispielsweise durch eine I2C-Kommunikationsleitung (I2C - Inter-Integrated Circuit) realisiert werden. Zum Aufwecken oder Einschalten des Hauptmoduls ist vorgesehen, dass die Hilfsprozessoreinrichtung ein Netzteil des Steuergeräts ansteuert, damit durch das Netzteil eine Versorgungsleitung zum elektrischen Versorgen des Hauptmoduls mit einem elektrischen Bordnetz elektrisch gekoppelt wird.

Besonders bevorzugt ist hierbei vorgesehen, dass die Hilfsprozessoreinrichtung dazu ausgelegt ist, die Internetadresse bei dem Steuerserver durch Erzeugen einer IP-Socket zu hinterlegen. Hierdurch ergibt sich eine besonders geringe Latenzzeit.

Bevorzugt ist die Prozessoreinrichtung dazu ausgelegt, über eine mittels des Mobilfunkmoduls aufgebaute Internetverbindung von dem Steuerserver unaufgefordert ausgesendete Steuerdaten zu empfangen. Solche Steuerdaten können beispielsweise mittels eines PUSH-Protokolls, beispielsweise dem HTTP-Serverpush, erzeugt werden. Hierdurch ergibt sich der Vorteil, dass das Steuergerät besonders energieeffizient betrieben werden kann, weil es erst aktiv werden muss, wenn Steuerdaten eintreffen.

Das erfindungsgemäße Steuergerät lässt sich auf unterschiedliche Weise mit jeweils besonderen Vorteilen in dem Kraftfahrzeug betreiben.

Eine Ausführungsform sieht vor, dass das Steuergerät dazu ausgelegt ist, als Gateway Kommunikationsdaten zwischen dem Steuerserver und einem Kommunikationsbus des Kraftfahrzeugs zu übertragen. Hierdurch ergibt sich der Vorteil, dass durch den Steuerservers auch andere Geräte als das erfindungsgemäße Steuergerät gesteuert werden können.

Eine andere Ausführungsform sieht vor, dass die Hilfsprozessoreinrichtung dazu ausgelegt ist, von dem Steuerserver Updatedaten zu empfangen und auf der Grundlage der Updatedaten ein Update einer Betriebssoftware des Hauptmoduls durchzuführen. Indem dies während der Parkphase bei abgeschalteten Hauptmodul geschieht, kann hierdurch die Betriebssoftware ohne Beeinträchtigung des eigentlichen Betriebs des Hauptmoduls durchgeführt werden, so dass dies keinerlei Einschränkung für den Benutzernutzen mit sich bringt.

Eine andere Ausführungsform sieht vor, dass das Steuergerät dazu ausgelegt ist, in Abhängigkeit von einem Startbefehl des Steuerservers zumindest ein anderes Steuergerät des Kraftfahrzeugs über einen Kommunikationsbus zu starten. Als Kommunikationsbus kann beispielsweise ein CAN-Bus (CAN - Controller Area Network) bereitgestellt sein. Das andere Steuergerät kann beispielsweise eine Alarmanlage oder ein Motorsteuergerät des Kraftfahrzeugs sein. Damit lässt sich über den Steuerserver in dem Kraftfahrzeug ein Alarm auslösen oder beispielsweise ein Verbrennungsmotor starten, um einen Einfrierschutz bei dem Kraftfahrzeug bereitzustellen, wenn eine Temperatur unter einen vorbestimmten Schwellenwert gefallen ist.

Eine andere Ausführungsform sieht vor, dass das Steuergerät dazu ausgebildet ist, in Abhängigkeit von Konfigurationsdaten des Steuerservers eine Standheizung des Kraftfahrzeugs zu programmieren. Dann in der bereits beschrieben Weise ein Benutzer beispielsweise von einem Heim-Computer aus über den Steuerserver in dem Kraftfahrzeug die Standheizung einstellen.

Eine andere Ausführungsform sieht vor, dass das Steuergerät dazu ausgelegt ist, in Abhängigkeit von einem Entriegelungsbefehl des Steuerservers eine Zentralverriegelung des Kraftfahrzeugs zu entriegeln. Hierdurch ergibt sich der Vorteil, dass beispielsweise nach einem Schlüsselverlust ein Benutzer das Kraftfahrzeug durch den Entriegelungsbefehl entriegelt bekommen kann.

Die Kommunikationsdaten, die Updatedaten, die Konfigurationsdaten, der Aufweckbefehl, der Startbefehl und der Entriegelungsbefehl werden hier auch allgemein als Steuerdaten bezeichnet.

Besonders bevorzugt ist vorgesehen, dass das Steuergerät als Infotainmentsystem ausgestaltet ist. Dann stehen dem Steuergerät mit dem Hauptmodul eine Vielzahl von Funktionalitäten zur Verfügung, die sich nun erfindungsgemäß über den Steuerserver mit geringem Aufwand auch während der Parkphase fernsteuern lassen.

Zu der Erfindung gehört auch ein Kraftfahrzeug, welches dadurch gekennzeichnet ist, dass es eine Ausführungsform des erfindungsgemäßen Steuergeräts aufweist. Das erfindungsgemäße Kraftfahrzeug ist bevorzugt als Kraftwagen, insbesondere als Personenkraftwagen, ausgestaltet.

Zu der Erfindung gehört auch ein Verfahren zum Fernsteuern eines Kraftfahrzeugs während einer Parkphase des Kraftfahrzeugs, in welcher bei dem Kraftfahrzeug bei einem Steuergerät dessen Hauptmodul abgeschaltet ist, also ein Schaltungsbereich, welcher für einen Betrieb bei eingeschalteter Zündung vorgesehen ist. In dem Steuergerät bleibt während dieser Parkphase ein Mobilfunkmodul in einem Mobilfunknetzwerk eingebucht und eine Hilfsprozessoreinrichtung hält über das Mobilfunkmodul bei einem Adressserver des Internets eine Internetadresse reserviert, die bei einem Steuerserver des Internets bereitgestellt wird. Hierdurch kann der Steuerserver in der beschriebenen Weise mit geringer Latenz Steuerdaten an die Hilfsprozessoreinrichtung übermitteln. Die Erfindung sieht vor, dass die Hilfsprozessoreinrichtung von dem Steuerserver einen Aufweckbefehl empfängt und in Abhängigkeit von dem Aufweckbefehl über eine Aufweckleitung das Hauptmodul einschaltet. Hierdurch kann während der Parkphase ferngesteuert eine Funktion des Hauptmoduls aktiviert werden. Die Aufweckleitung kann beispielsweise durch eine I2C-Kommunikationsleitung (I2C - Inter-Integrated Circuit) realisiert werden. Zum Aufwecken oder Einschalten des Hauptmoduls ist vorgesehen, dass die Hilfsprozessoreinrichtung ein Netzteil des Steuergeräts ansteuert, damit durch das Netzteil eine Versorgungsleitung zum elektrischen Versorgen des Hauptmoduls mit einem elektrischen Bordnetz elektrisch gekoppelt wird.

Damit ein Benutzer des Kraftfahrzeugs vor und außerhalb, beispielweise von seinem Heimcomputer aus, überprüfen kann, ob das Kraftfahrzeug zum Empfang von Steuerdaten bereitsteht, sieht eine Weiterbildung des Verfahrens vor, dass der Steuerserver eine über das Internet abrufbare Statusanzeige erzeugt, welche angibt, ob das Kraftfahrzeug gerade die Internetadresse bereitstellt. Dann kann der Benutzer erkennen, ob er ohne Verzögerung eine Einstellung an seinem Kraftfahrzeug über den Steuerserver vornehmen kann.

Zu der Erfindung gehören auch Weiterbildungen des erfindungsgemäßen Verfahrens, welche Merkmale aufweisen, die bereits im Zusammenhang mit den Weiterbildungen des erfindungsgemäßen Steuergeräts beschrieben worden sind. Aus diesem Grund unterbleibt hier eine Beschreibung der entsprechenden Weiterbildungen des erfindungsgemäßen Verfahrens.

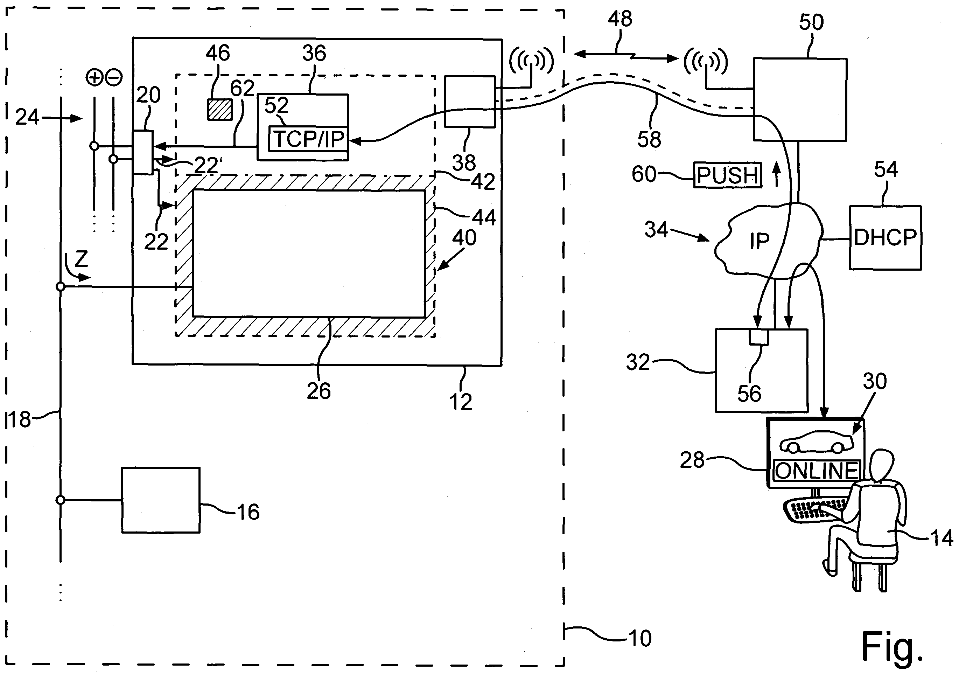

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Fig. ist von einem Kraftfahrzeug 10 ein Steuergerät 12 gezeigt, bei dem es sich um eine Ausführungsform des erfindungsgemäßen Steuergeräts handeln kann. Bei dem Kraftfahrzeug 10 kann es sich beispielsweise um einen Kraftwagen, insbesondere einen Personenkraftwagen, handeln. Das Kraftfahrzeug 10 ist von einem Benutzer 14 geparkt worden, das heißt beispielsweise in einer Garage abgestellt, die Zündung ausgeschaltet und das Kraftfahrzeug verschlossen worden.

Eine Zündung des Kraftfahrzeugs 10 ist ausgeschaltet, das Steuergerät 12 und weitere Steuergeräte, von denen in der Fig. ein Steuergerät 16 beispielhaft dargestellt ist, sind in einem Ruhemodus oder einem Standby-Modus. Hierzu wurde zum Einleiten der Parkphase ein Zündung-Aus-Signal Z, beispielsweise über einen Kommunikationsbus 18, der beispielsweise ein CAN-Bus sein kann, an die Steuergeräte 12, 16 ausgesendet. In dem Steuergerät 12 kann in Reaktion auf das Zündung-Aus-Signal Z von einem Netzteil 20 eine Versorgungsleitung 22 von einem elektrischen Bordnetz 24 des Kraftfahrzeugs 10 entkoppelt worden sein. Hierdurch kann ein Hauptmodul 26 des Steuergeräts 12 stromlos geschaltet worden sein.

Bei dem Steuergerät 12 kann es sich beispielsweise um ein Infotainmentsystem handeln. Das Hauptmodul 26 kann dann beispielsweise einen Prozessor zum Bereitstellen einer Radiofunktion und/oder einer Navigationsfunktion und/oder einer Medienwiedergabefunktion, beispielsweise eine MP3-Abspielfunktion, umfassen.

Bei dem Kraftfahrzeug 10 kann der Benutzer 14 dennoch beispielsweise von zu Hause aus z.B. über ein Smartphone oder einen Heimcomputer 28 bei dem geparkten und abgeschaltetem Kraftfahrzeug 10 eine Konfiguration vornehmen. Dem Benutzer 14 wird an dem Heimcomputer 28 eine Statusanzeige 30 angezeigt, die ihm anzeigt, dass er auf das Kraftfahrzeug 10 zugreifen kann, also das Kraftfahrzeug 10 zum Empfangen von Daten bereitsteht.

Die Statusanzeige kann von einem Steuerserver 32 erzeugt worden sein, die der Benutzer 14 mit dem Heimcomputer 28 über das Internet 34 abgerufen haben kann. Hierzu kann eine Internetverbindung 36 vom Heimcomputer 28 aus zum Steuerserver 32 aufgebaut worden sein.

Damit das Kraftfahrzeug 10 über das Internet 34 mittels des Steuerservers 32 konfigurierbar bleibt, wird in dem Steuergerät 12 während der Parkphase nicht jede Komponente stromlos geschaltet. In dem Steuergerät 12 können eine Hilfsprozessoreinrichtung 36 und ein Mobilfunkmodul 38 auch während der Parkphase in Betrieb sein. Die Hilfsprozessoreinrichtung 36 kann beispielsweise einen eigenen Prozessor umfassen, der von dem Hauptmodul 26 verschieden ist. Es kann auch vorgesehen sein, dass die Hilfsprozessoreinrichtung 36 als Bestandteil des Mobilfunkmoduls 38 ausgestaltet ist, das hierzu beispielsweise ebenfalls über einen eigenen Prozessor verfügen kann. Es kann auch vorgesehen sein, dass das Hauptmodul 26 und die Hilfsprozessoreinrichtung 36 auf einer gemeinsamen Platine 40 angeordnet sind und die Platine 40 in beispielsweise zwei Powerdomains 42, 44 unterteilt ist, die über separate Versorgungsleitungen 22, 22' mit dem Netzteil 20 verbunden sein können. Dann kann das Hauptmodul 26 stromlos geschaltet werden, während die Hilfsprozessoreinrichtung 36 weiter in Betrieb sein kann. Die Hilfsprozessoreinrichtung 36 kann beispielsweise durch einen eigenen Prozessorchip bereitgestellt sein, wobei auch bei betriebener Hilfsprozessoreinrichtung 36 weitere Komponenten 46 des Chips beispielsweise mit Hilfe eines Stromsparmodus stromlos geschaltet sein können. Es kann auch vorgesehen sein, dass bei dem Prozessorchip eine Prozessortaktrate reduziert wird.

Das Mobilfunkmodul 38 kann beispielsweise ein GSM-Modul, UMTS-Modul und/oder LTE-Modul aufweisen. Das Mobilfunkmodul 38 kann dazu ausgelegt sein, während der Parkphase bei abgeschaltetem Hauptmodul 26 über eine Funkverbindung 48 bei einem Mobilfunknetzwerk 50 eingebucht oder angemeldet zu bleiben, so dass von dem Mobilfunknetzwerk 50 aus Mobilfunkdaten über die Funkverbindung 48 an das Mobilfunkmodul 38 übertragen werden können, ohne dass sich zuvor das Mobilfunkmodul 38 noch einmal identifizieren muss.

Die Hilfsprozessoreinrichtung 36 kann dann über das Mobilfunkmodul 38 und das Mobilfunknetz 50 eine Internetverbindung zu dem Steuerserver 32 aufbauen. Dies kann beispielsweise dadurch realisiert werden, dass in der Hilfsprozessoreinrichtung 36 ein TCP-IP-Stack 52 bereitgestellt ist und eine IP-Adresse für den TCP-IP-Stack von einem Adressserver 54, beispielsweise einem DHCP-Server (DHCP - Dynamic Host Configuration Protocol) abgerufen oder heruntergeladen wird. Die Internetadresse kann durch die Hilfsprozessoreinrichtung 36 z.B. dazu genutzt werden, eine IP-Socket bei dem Steuerserver 32 zu erzeugen. Über die IP-Socket 56 können dann durch einen (hier nicht dargestellten) TCP-IP-Stack des Steuerservers 32 Steuerdaten über eine Internetverbindung 58 an die Hilfsprozessoreinrichtung 36 übertragen werden. Hierzu ist bevorzugt auch keine weitere Aufforderung durch die Hilfsprozessoreinrichtung 36 nötig, das heißt der Steuerserver 32 kann unaufgefordert beispielsweise mittels eines PUSH-Befehls 60 die Steuerdaten, z.B. Konfigurationsdaten, Updatedaten, Kommunikationsdaten, einen Startbefehl, einen Entriegelungsbefehl oder einen Aufweckbefehl, an die Hilfsprozessoreinrichtung 36 aussenden.

Welche Daten der Steuerserver 32 hierbei als PUSH-Daten 60 aussendet, kann der Nutzer 14 von seinem Heimcomputer 28 aus steuern. So kann er beispielsweise eine Standheizung programmieren, in dem er einen Konfigurationsbefehl an einer Bedienschnittstelle des Heimcomputers 28 erzeugt und der Konfigurationsbefehl durch den Steuerserver 32 an die Hilfsprozessoreinrichtung 36 ausgesendet wird, welcher den Konfigurationsbefehlt dann beispielsweise durch den Heimcomputer 28 beispielsweise an das Steuergerät 16 übertragen kann, wobei das Steuergerät 16 in diesem Fall dann für die Steuerung der Standheizung ausgelegt ist.

Es kann auch vorgesehen sein, dass die Hilfsprozessoreinrichtung 36 nicht direkt die Buskommunikation steuert, sondern dass eine Aufweckleitung 62 bereitgestellt ist, über welche die Hilfsprozessoreinrichtung 36 das Netzteil 28 aktivieren kann, welches dann beispielsweise die Versorgungsleitung 22 wieder mit dem elektrischen Bordnetz 24 koppeln kann, so dass das Hauptmodul 26 eingeschaltet wird. Dann kann das Hauptmodul 26 beispielsweise die Buskommunikation durchführen.

Insgesamt bleibt also bei dem Kraftfahrzeug 10 das eingebaute Telefon im Netzwerk des Mobilfunkproviders eingebucht und eine Hilfsprozessoreinrichtung mit Applikationssoftware aktiv. So kann eine Verbindung zum Beispiel über das HTTP-Protokoll zu dem Steuerserver 32 aufrechterhalten werden. Mittels eines PUSH-Befehls 60 kann dann das Steuergerät 12 aufgeweckt werden. Besonders vorteilhaft ist es hierbei, wenn es sich bei dem Steuergerät 12 um ein Infotainmentsteuergerät handelt.

In der beschriebenen Weise ist dabei das Infotainmentsteuergerät größtenteils aber abgeschaltet. Nur das Telefonmodul, das heißt das Mobilfunkmodul 38, und der Applikationsprozessor sind teilweise aktiv, so dass die Hilfsprozessoreinrichtung 36 und das Mobilfunkmodul 38 bereitstehen. Selbst beim Applikationsprozessor sind einige Teile oder Komponenten 46, wie beispielsweise ein Hauptprozessor, eine Graphical Processing Unit (GPU), eine Schnittstelle für PCI und SATA bevorzugt abgeschaltet.

Auf dem Applikationsprozessor läuft eine Applikation die die Verbindung 58 Server aufrecht hält und beim Request des Servers, beispielsweise also dem PUSH-Befel 60, das Powermanagement des Netzteils 20 informieren kann.

Eine Wake-up-Leitung oder Aufweckleitung 62, die als I2C-Kommunikationsleitung realisiert sein kann, geht vom Applikationsprozessor zum Prozessor für das Powermanagement, der beispielsweise im Netzteil 20 bereitgestellt sein kann. Mittels dieser Leitung kann das restliche Steuergerät 12 geweckt werden.

So kann das Infotainmentsteuergerät beispielsweise remote geupdatet werden, also ferngewartet werden. Das Infotainmentsteuersystem kann auch als Gateway für Fahrzeugdienste genutzt werden. Vom Infotainmentsteuersystem kann dann das Restfahrzeug aufgeweckt werden und zum Beispiel das Fahrzeug aufgesperrt werden und eine Standheizung programmiert werden. Der Steuerserver weiß bevor er das Infotainmentsteuergerät weckt, ob es überhaupt erreichbar ist und kann dies vorab dem Benutzer 14 beispielsweise auf einer Smartphone-App oder einem Webinterface anzeigen. Das Wecken des Infotainmentsteuergeräts erfolgt schneller als zum Beispiel via SMS, da Latenzzeiten beim Netzwerk, Provider und SMS-Gateway entfallen.

Insgesamt zeigt das Beispiel, wie durch die Erfindung ein Infotainment-Steuergerätes über ein Internetprotokoll geweckt werden kann.

## Patentansprüche

1. Steuergerät (12) für ein Kraftfahrzeug (10), wobei das Steuergerät (12) dazu ausgelegt ist, bei Empfangen eines in dem Kraftfahrzeug (10) zum Einleiten einer Parkphase ausgesendeten Zündung-Aus-Signals (Z) ein für einen Betrieb bei eingeschalteter Zündung vorgesehenes Hauptmodul (26) des Steuergeräts (12) abzuschalten,
**dadurch gekennzeichnet, dass**
im Steuergerät (12) ein Mobilfunkmodul (38) bereitgestellt ist, welches dazu ausgelegt ist, bei abgeschaltetem Hauptmodul (26) in einem Mobilfunknetzwerk (50) eingebucht zu bleiben, und eine Hilfsprozessoreinrichtung (36) bereitgestellt und dazu ausgelegt ist, über das Mobilfunkmodul (38) bei einem Adressserver (54) des Internets (34) eine Internetadresse zu reservieren und bei einem Steuerserver (32) des Internets (34), welcher zum Fernsteuern des Kraftfahrzeugs (10) ausgelegt ist, die Internetadresse zu hinterlegen, wobei die Hilfsprozessoreinrichtung (36) dazu ausgelegt ist, von dem Steuerserver (32) einen Aufweckbefehl zu empfangen und in Abhängigkeit von dem Aufweckbefehl über eine Aufweckleitung (62) das Hauptmodul (26) einzuschalten, wobei zum Einschalten des Hauptmoduls (26) vorgesehen ist, dass die Hilfsprozessoreinrichtung (36) ein Netzteil (20) des Steuergeräts (12) ansteuert, damit durch das Netzteil (20) eine Versorgungsleitung (22) zum elektrischen Versorgen des Hauptmoduls (26) mit einem elektrischen Bordnetz (24) elektrisch gekoppelt wird.

2. Steuergerät (12) nach Anspruch 1, wobei die Hilfsprozessoreinrichtung (36) dazu ausgelegt ist, die Internetadresse bei dem Steuerserver (32) durch Erzeugen einer IP-Socket (56) zu hinterlegen.

3. Steuergerät (12) nach einem der vorhergehenden Ansprüche, wobei Hilfsprozessoreinrichtung (36) dazu ausgelegt ist, über eine mittels des Mobilfunkmoduls (38) aufgebaute Internetverbindung (58) von dem Steuerserver (32) unaufgefordert ausgesendete Steuerdaten (60) zu empfangen.

4. Steuergerät (12) nach einem der vorhergehenden Ansprüche, wobei das Steuergerät dazu ausgelegt ist, als Gateway Kommunikationsdaten zwischen dem Steuerserver (32) und einem Kommunikationsbus (18) des Kraftfahrzeugs (10) zu übertragen.

5. Steuergerät (12) nach einem der vorhergehenden Ansprüche, wobei Hilfsprozessoreinrichtung (36) dazu ausgelegt ist, von dem Steuerserver (32) Updatedaten zum empfangen und auf der Grundlage der Updatedaten ein Update einer Betriebssoftware des Hauptmoduls (26) durchzuführen.

6. Steuergerät (12) nach einem der vorhergehenden Ansprüche, wobei das Steuergerät (12) dazu ausgelegt ist, in Abhängigkeit von einem Startbefehl des Steuerservers (23) zumindest ein anderes Steuergerät (16) des Kraftfahrzeugs (10) über einen Kommunikationsbus (18) zu starten und/oder zu steuern.

7. Steuergerät (12) nach einem der vorhergehenden Ansprüche, wobei das Steuergerät (12) dazu ausgelegt ist, in Abhängigkeit von Konfigurationsdaten des Steuerservers (32) eine Standheizung des Kraftfahrzeugs (10) zu programmieren.

8. Steuergerät (12) nach einem der vorhergehenden Ansprüche, wobei das Steuergerät (12) dazu ausgelegt ist, in Abhängigkeit von einem Entriegelungsbefehl des Steuerservers (32) eine Zentralverriegelung des Kraftfahrzeugs (10) zu entriegeln.

9. Steuergerät (12) nach einem der vorhergehenden Ansprüche, wobei das Steuergerät (12) als Infotainmentsystem ausgestaltet ist.

10. Kraftfahrzeug (10) mit einem Steuergerät (12) nach einem der vorhergehenden Ansprüche.

11. Verfahren zum Fernsteuern eines Kraftfahrzeugs (10) während einer Parkphase des Kraftfahrzeugs (10), in welcher bei dem Kraftfahrzeug (10) ein für einen Betrieb bei eingeschalteter Zündung vorgesehenes Hauptmodul (26) eines Steuergeräts (12) abgeschaltet ist,
**dadurch gekennzeichnet, dass**
in dem Steuergerät (12) ein Mobilfunkmodul (38) in einem Mobilfunknetzwerk (50) eingebucht bleibt und eine Hilfsprozessoreinrichtung (36) über das Mobilfunkmodul (38) bei einem Adressserver (54) des Internets (34) eine Internetadresse reserviert hält und bei einem Steuerserver (32) des Internets (32) die Internetadresse bereitstellt, wobei die Hilfsprozessoreinrichtung (36) von dem Steuerserver (32) einen Aufweckbefehl empfängt und in Abhängigkeit von dem Aufweckbefehl über eine Aufweckleitung (62) das Hauptmodul (26) einschaltet, wobei zum Einschalten des Hauptmoduls (26) die Hilfsprozessoreinrichtung (36) ein Netzteil (20) des Steuergeräts (12) ansteuert, damit durch das Netzteil (20) eine Versorgungsleitung (22) zum elektrischen Versorgen des Hauptmoduls (26) mit einem elektrischen Bordnetz (24) elektrisch gekoppelt wird.

12. Verfahren nach Anspruch 11, wobei der Steuerserver (32) eine über das Internet (34) abrufbare Statusanzeige (30) erzeugt, welche angibt, ob das Kraftfahrzeug (10) gerade die Internetadresse bereitstellt.

## Claims

1. Control device (12) for a motor vehicle (10), wherein the control device (12) is configured to turn off a main module (26) of the control device (12) provided for operation when the ignition is turned on upon receiving an ignition-off signal (Z) sent in the motor vehicle (10) to initiate a parking phase,
**characterised in that**
a mobile radio module (38) is provided in the control device (12) that is configured to remain logged into a mobile radio network (50) when the main module (26) is turned off and an auxiliary processor device (36) is provided and configured to reserve an Internet address via the mobile radio module (38) at an address server (54) of the Internet (34) and to store the Internet address in a control server (32) of the Internet (34) that is configured to remotely control the motor vehicle (10), wherein the auxiliary processor device (36) is configured to receive a wake-up command from the control server (32) and to turn on the main module (26) via a wake-up line (62) as a function of the wake-up command, wherein in order to turn on the main module (26) the auxiliary processor device (36) actuates a power supply (20) of the control device (12) so that a supply line (22) is electrically coupled with an on-board electrical system (24) to electrically supply the main module (26) through the power supply (20).

2. Control device (12) according to claim 1, wherein the auxiliary processor device (36) is configured to store the Internet address in the control server (32) by generating an IP socket (56).

3. Control device (12) according to any one of the preceding claims, wherein auxiliary processor device (36) is configured to receive control data (60) sent from the control server (32) without being requested via an Internet connection (58) established by means of the mobile radio module (38).

4. Control device (12) according to any one of the preceding claims, wherein the control device is configured to transfer, as a gateway, communication data between the control server (32) and a communication bus (18) of the motor vehicle (10).

5. Control device (12) according to any one of the preceding claims, wherein auxiliary processor device (36) is configured to receive update data from the control server (32) and to carry out an update of operating software of the main module (26) based on the update data.

6. Control device (12) according to any one of the preceding claims, wherein the control device (12) is configured to start and/or to control at least one other control device (16) of the motor vehicle (10) via a communication bus (18) as a function of a start command of the control server (23).

7. Control device (12) according to any one of the preceding claims, wherein the control device (12) is configured to program auxiliary heating of the motor vehicle (10) as a function of configuration data of the control server (32).

8. Control device (12) according to any one of the preceding claims, wherein the control device (12) is configured to unlock central locking of the motor vehicle (10) as a function of an unlocking command of the control server (32).

9. Control device (12) according to any one of the preceding claims, wherein the control device (12) is designed as an infotainment system.

10. Motor vehicle (10) with a control device (12) according to any one of the preceding claims.

11. Method for remotely controlling a motor vehicle (10) during a parking phase of the motor vehicle (10) in which a main module (26) of a control device (12), provided for operation when the ignition is turned on, is turned off,
**characterised in that**
a mobile radio module (38) remains logged into a mobile radio network (50) in the control device (12) and an auxiliary processor device (36) keeps an Internet address reserved via the mobile radio module (38) at an address server (54) of the Internet (34) and provides the Internet address in a control server (32) of the Internet (34), wherein the auxiliary processor device (36) receives a wake-up command from the control server (32) and turns on the main module (26) via a wake-up line (62) as a function of the wake-up command, wherein in order to turn on the main module (26) the auxiliary processor device (36) actuates a power supply (20) of the control device (12) so that a supply line (22) is electrically coupled with an on-board electrical system (24) to electrically supply the main module (26) through the power supply (20).

12. Method according to claim 11, wherein the control server (32) generates a status display (30) that can be retrieved via the Internet (34) and that indicates whether the motor vehicle (10) is currently providing the Internet address.

## Revendications

1. Appareil de commande (12) pour un véhicule automobile (10), dans lequel l'appareil de commande (12) est configuré pour mettre hors service un module principal (26) de l'appareil de commande (12) prévu en vue d'un fonctionnement avec l'allumage en service lors de la réception d'un signal de coupure de l'allumage (Z) émis dans le véhicule automobile (10) afin d'initier une phase de stationnement,
**caractérisé en ce que**
un module de radiocommunication mobile (38) est fourni dans l'appareil de commande (12), lequel module de radiocommunication mobile est configuré pour rester inscrit dans un réseau de radiocommunication mobile (50) lorsque le module principal (26) est hors service, et un dispositif de processeur auxiliaire (36) est fourni et configuré pour réserver une adresse Internet auprès d'un serveur d'adresses (54) de l'Internet (34) par l'intermédiaire du module de radiocommunication mobile (38) et pour enregistrer l'adresse Internet auprès d'un serveur de commande (32) de l'Internet (34), qui est configuré pour commander à distance le véhicule automobile (10), dans lequel le dispositif de processeur auxiliaire (36) est configuré pour recevoir du serveur de commande (32) une instruction de réveil et pour mettre en service le module principal (26) en fonction de l'instruction de réveil par l'intermédiaire d'une ligne de réveil (62), dans lequel il est prévu pour mettre en service le module principal (26) que le dispositif de processeur auxiliaire (36) pilote un bloc d'alimentation (20) de l'appareil de commande (12) afin qu'une ligne d'alimentation (22) servant à l'alimentation électrique du module principal (26) soit couplée de manière électrique au réseau de bord (24) électrique par le bloc d'alimentation (20).

2. Appareil de commande (12) selon la revendication 1, dans lequel le dispositif de processeur auxiliaire (36) est configuré pour enregistrer l'adresse Internet auprès du serveur de commande (32) par la production d'un port IP (56).

3. Appareil de commande (12) selon l'une quelconque des revendications précédentes, dans lequel le dispositif de processeur auxiliaire (36) est configuré pour recevoir, par l'intermédiaire d'une connexion Internet (58) établie au moyen du module de radiocommunication mobile (38), des données de commande (60) émises de manière spontanée par le serveur de commande (32).

4. Appareil de commande (12) selon l'une quelconque des revendications précédentes, dans lequel l'appareil de commande est configuré pour transférer en tant que passerelle des données de communication entre le serveur de commande (32) et un bus de communication (18) du véhicule automobile (10).

5. Appareil de commande (12) selon l'une quelconque des revendications précédentes, dans lequel le dispositif de processeur auxiliaire (36) est configuré pour recevoir du serveur de commande (32) des données de mise à jour et pour exécuter, sur la base des données de mise à jour, une mise à jour d'un logiciel d'exploitation du module principal (26).

6. Appareil de commande (12) selon l'une quelconque des revendications précédentes, dans lequel l'appareil de commande (12) est configuré pour démarrer et/ou commander, en fonction d'une instruction de démarrage du serveur de commande (23), au moins un autre appareil de commande (16) du véhicule automobile (10) par l'intermédiaire d'un bus de communication (18).

7. Appareil de commande (12) selon l'une quelconque des revendications précédentes, dans lequel l'appareil de commande (12) est configuré pour programmer, en fonction des données de configuration du serveur de commande (32), un chauffage d'appoint du véhicule automobile (10).

8. Appareil de commande (12) selon l'une quelconque des revendications précédentes, dans lequel l'appareil de commande (12) est configuré afin de déverrouiller, en fonction d'une instruction de déverrouillage du serveur de commande (32), un verrouillage centralisé du véhicule automobile (10).

9. Appareil de commande (12) selon l'une quelconque des revendications précédentes, dans lequel l'appareil de commande (12) est configuré sous la forme d'un système d'infodivertissement.

10. Véhicule automobile (10) comprenant un appareil de commande (12) selon l'une quelconque des revendications précédentes.

11. Procédé servant à commander à distance un véhicule automobile (10) pendant une phase de stationnement du véhicule automobile (10), dans laquelle un module principal (26) d'un appareil de commande (12) prévu pour un fonctionnement lors d'un allumage en service est mis hors service dans le véhicule automobile (10),
**caractérisé en ce que**
un module de radiocommunication mobile (38) reste inscrit dans un réseau de radiocommunication mobile (50) dans l'appareil de commande (12), et un dispositif de processeur auxiliaire (36) maintient réservée une adresse Internet auprès d'un serveur d'adresses (54) de l'internet (34) par l'intermédiaire du module de radiocommunication mobile (38) et fournit l'adresse Internet auprès d'un serveur de commande (32) de l'Internet (34), dans lequel le dispositif de processeur auxiliaire (36) reçoit du serveur de commande (32) une instruction de réveil et met en service le module principal (26) en fonction de l'instruction de réveil par l'intermédiaire d'une ligne de réveil (62), dans lequel le dispositif de processeur auxiliaire (36) pilote un bloc d'alimentation (20) de l'appareil de commande (12) afin de mettre en service le module principal (26) afin qu'une ligne d'alimentation (22) servant à l'alimentation électrique du module principal (26) soit couplée de manière électrique au réseau de bord (24) électrique par le bloc d'alimentation (20).

12. Procédé selon la revendication 11, dans lequel le serveur de commande (32) génère un affichage de statut (30) pouvant être appelé par l'intermédiaire de l'Internet (34), lequel indique si le véhicule automobile (10) fournit précisément l'adresse Internet.
